# EUROPÄISCHE PATENTSCHRIFT

(11) **EP 4 371 826 B1**
(45) Veröffentlichungstag und Bekanntmachung des Hinweises auf die Patenterteilung: **08.10.2025**
(21) Anmeldenummer: 24167177.5
(22) Anmeldetag: 20.04.2022
(51) Int. Cl.: B60R 9/055

(54) **TRANSPORTBOX, INSBESONDERE DACHBOX, FÜR EIN KRAFTFAHRZEUG**
TRANSPORT BOX, IN PARTICULAR A ROOF BOX FOR A MOTOR VEHICLE
COFFRE DE TRANSPORT, EN PARTICULIER COFFRE DE TOIT, POUR VÉHICULE AUTOMOBILE

(30) Priorität: 26.04.2021 DE 102021204105; 26.08.2021 DE 102021209412
(43) Veröffentlichungstag der Anmeldung: 22.05.2024
(62) Teilanmeldung aus: 22168968.0
(73) Patentinhaber: ATERA GmbH, 88299 Leutkirch im Allgäu (DE)
(72) Erfinder: Raida, Hans-Joachim, 42799 Leichlingen (DE); Schmidt, Maximilian, 87764 Legau (DE)
(74) Vertreter: Patentanwälte Ruff, Wilhelm, Beier, Dauster & Partner mbB

(56) Entgegenhaltungen:
- EP-A1- 3 587 188
- WO-A1-2021/023907
- CA-A- 1 116 141

## Beschreibung

Die Erfindung betrifft eine Transportbox, insbesondere eine Dachbox, für ein Kraftfahrzeug, aufweisend
- eine Grundschale, die in einem betriebsfertig montierten Zustand fahrzeugfest angeordnet ist,
- eine Deckelschale, die um wenigstens eine Schwenkachse schwenkbeweglich an der Grundschale gelagert ist zwischen einer Schließstellung, in welcher die Deckelschale unter Einschluss eines Transportvolumens auf der Grundschale aufliegt, und einer Öffnungsstellung, in welcher die Deckelschale unter Freigabe des Transportvolumens um die Schwenkachse verlagert von der Grundschale angehoben ist,
- jeweils wenigstens einen Scharnierverschluss auf gegenüberliegenden Längsseiten, mittels dessen die Deckelschale in der Schließstellung an der Grundschale arretierbar oder freigebbar ist oder um die Schwenkachse schwenkbeweglich gelagert ist abhängig von einer Ansteuerung durch eine manuell bedienbare Betätigungseinrichtung.

Eine derartige Transportbox ist aus der WO 2017/001651 A1 bekannt. Die bekannte Transportbox weist eine Grundschale sowie eine Deckelschale auf, die aufeinanderfügbar sind und in aufeinandergefügtem Zustand ein Transportvolumen umgrenzen. Die Deckelschale ist mithilfe von insgesamt sechs Scharnierverschlüssen an der Grundschale gehalten, wobei jeweils drei Scharnierverschlüsse auf gegenüberliegenden Längsseiten der Transportbox vorgesehen sind. Die Scharnierverschlüsse sind zwischen zwei verschiedenen Stellungen verstellbar. In einer ersten Stellung arretieren sie die Deckelschale relativ zur Grundschale. In dieser Stellung definieren die Scharnierverschlüsse jeweils einer Längsseite ein gemeinsames Schwenkscharnier, um die Deckelschale gegenüber der Grundschale aufzuklappen. In einer zweiten Stellung geben die Scharnierverschlüsse jeweils einer Längsseite die Deckelschale vollständig frei, um ein Öffnen der Deckelschale zu ermöglichen. Die Ansteuerung der Scharnierverschlüsse zur Verlagerung in die unterschiedlichen Stellungen erfolgt durch eine manuell bedienbare Betätigungseinrichtung, die zwei auf den gegenüberliegenden Längsseiten angeordnete Betätigungselemente aufweist. Das jeweilige Betätigungselement ist mittels eines zug- und drucksteifen Bewegungsübertragungsbands, das längsverschiebbar an einer längsseitigen Seitenwand der Grundschale gelagert ist, mit den drei Scharnierverschlüssen jeweils einer Längsseite gekoppelt.

Die WO2021023907 A1 offenbart ein Transportbox nach dem Oberbegriff von Anspuch 1.

Aufgabe der Erfindung ist es, eine Transportbox der eingangs genannten Art zu schaffen, die auch bei crashbedingten Belastungen einen sicheren Rückhalt von in der Transportbox befindlichem Transportgut ermöglicht.

Diese Aufgabe wird durch die Merkmale des Anspruchs 1 gelöst. Die Sicherungseinrichtung gewährleistet einen zusätzlichen Schutz im Bereich wenigstens einer Stirnseite der Transportbox, da zusätzlich zu den längsseitigen Scharnierverschlüssen auch wenigstens frontseitig oder heckseitig oder auch front- und heckseitig eine zusätzliche formschlüssige Sicherung vorgesehen ist, die verhindert, dass eine Stirnseite der Deckelschale sich von der entsprechenden Stirnseite der Grundschale lösen kann. Beim Stand der Technik konnten sich bei starken positiven oder negativen Fahrzeugbeschleunigungen, die insbesondere im montierten Zustand der Transportbox an einem Kraftfahrzeug und bei einem Fahrzeugaufprall des Kraftfahrzeugs auftreten konnten, die Deckelschale und die Grundschale so verformen, dass die Transportbox stirnseitig aufklaffte und so Transportgut aus der Transportbox heraus auf eine Fahrbahn geschleudert werden konnte. Dies wird durch die Erfindung vermieden. Die erfindungsgemäße Lösung eignet sich in besonders vorteilhafter Weise für Transportboxen, die an Personenkraftwagen oder an Wohnmobilen vorzugsweise dachseitig befestigt werden. Eine erfindungsgemäße Transportbox kann in gleicher Weise auch seitlich an einem entsprechenden Kraftfahrzeug befestigt werden. Die Befestigung der erfindungsgemäßen Transportbox erfolgt jeweils in Längsausrichtung des jeweiligen Kraftfahrzeugs, so dass gegenüberliegende Längsseiten der Transportbox im montierten Zustand der Transportbox jeweils auch von einer Fahrzeuglängsseite aus zugänglich sind.

Erfindungsgemäß ist die manuell bedienbare Betätigungseinrichtung mittels wenigstens eines flexiblen, zug- und drucksteifen Bewegungsübertragungsstrangs zur Ansteuerung wenigstens eines beweglichen, ein Verschlusssteuerteil bildenden Verschlussteils für eine Überführung in die Sperrstellung oder die Öffnungsstellung ausgebildet. Vorzugsweise ist der Bewegungsübertragungsstrang mit einem beweglich angeordneten Verschlusssteuerteil der Verschlussanordnung gekoppelt. Als Bewegungsübertragungsstrang ist vorzugsweise ein in der Grundschale linearbeweglich gelagertes Metallband vorgesehen. Der Bewegungsübertragungsstrang kann auch durch ein Flachband aus einem anderen Material hergestellt sein. Alternativ ist es möglich, den Bewegungsübertragungsstrang durch ein Kabel mit rundem Querschnitt zu bilden, das in einer entsprechend angepassten Längsführung in der Grundschale oder der Deckelschale geführt ist. Vorteilhaft ist der Bewegungsübertragungsstrang im Bereich der Grundschale geführt, da die Grundschale bei einem Einsatz auf einem Kraftfahrzeugdach fahrzeugfest montiert wird, während die Deckelschale relativ zu der Grundschale öffnungsfähig ist. Grundsätzlich ist es aber auch möglich, den Bewegungsübertragungsstrang im Bereich der Deckelschale vorzusehen. Als Bewegungsübertragungsstrang ist auch ein Gewindesteigungskabel einsetzbar, das an seinem Außenumfang mit Schraubwindungen versehen ist, und das mittels einer drehbaren Schraubhülse linearbeweglich verlagert wird. In vorteilhafter Weise dient der Bewegungsübertragungsstrang zur Ansteuerung des beweglichen Verschlusssteuerteils der jeweiligen Verschlussanordnung. Der Transportbox kann ein einzelner, umlaufender, zug- und drucksteifer Bewegungsübertragungsstrang zugeordnet sein. Alternativ können wenigstens zwei über den Umfang der Grundschale verteilt angeordnete Bewegungsübertragungsstränge vorgesehen sein, die jeweils bis in den Bereich der wenigstens einen stirnseitigen Verschlussanordnung erstreckt sind.

Erindungsgemäß sind im Bereich der wenigstens einen Verschlussanordnung Ausgleichs- oder Freilaufelemente mit dem Bewegungsübertragungsstrang gekoppelt, die eine alternative Betätigung der Verschlussanordnung durch eine Betätigungseinrichtung der einen Längsseite oder der anderen Längsseite gewährleisten. Entsprechende Ausgleichs- oder Freilaufelemente sind mechanische Bauteile, die derart mit dem Bewegungsübertragungsstrang und der Verschlussanordnung gekoppelt sind, dass zwangsläufig die Ansteuerung der Scharnierverschlüsse der einen Längsseite auch eine komplementäre Ansteuerung der stirnseitigen Verschlussanordnung bewirkt. Hierdurch ist sichergestellt, dass aus einem geschlossenen Zustand der Transportbox mit einem Entriegeln der Scharnierverschlüsse der einen Längsseite durch die Betätigungseinrichtung auch alle Verschlussanordnungen an den Stirnseiten der Transportbox mit geöffnet werden, um ein anschließendes Aufschwenken der Deckelschale relativ zur Grundschale zu ermöglichen.

In Ausgestaltung der Erfindung weist die Sicherungseinrichtung front- und/oder heckseitig jeweils wenigstens eine Verschlussanordnung auf, die wenigstens zwei miteinander in Wirkverbindung bringbare Verschlussteile hat, von denen eines der Deckelschale und das andere der Grundschale zugeordnet ist. Vorteilhaft weist die Verschlussanordnung wenigstens zwei Verschlussteile auf, von denen eines an der Deckelschale und das andere an der Grundschale befestigt ist. Zudem ist wenigstens ein drittes Verschlussteil vorgesehen, das relativ zu den beiden ortsfesten Verschlussteilen beweglich gelagert ist, um die beiden Verschlussteile formschlüssig miteinander zu verbinden oder die beiden Verschlussteile für eine Öffnungsbewegung relativ zueinander freizugeben. Das wenigstens eine bewegliche Verschlussteil wird auch als Verschlusssteuerteil bezeichnet.

In weiterer Ausgestaltung der Erfindung sind die Verschlussteile relativ zueinander zwischen einer die Deckelschale und die Grundschale miteinander verriegelnden Sperrstellung und einer die Deckelschale und die Grundschale relativ zueinander freigebenden Öffnungsstellung beweglich angeordnet. Vorteilhaft weisen die Verschlussteile ein relativ zu der Grundschale beweglich angeordnetes Verschlusssteuerteil auf, das mit einem an der Deckelschale befestigten Verschlussteil einerseits und einem an der Grundschale befestigten Verschlussteil andererseits derart koppelbar ist, dass die Verschlussteile relativ zueinander verriegelt oder relativ zueinander freigegeben sind.

In weiterer Ausgestaltung der Erfindung ist das wenigstens eine andere Verschlussteil ortsfest angeordnet, und die Verschlussteile weisen zueinander komplementäre, formschlüssig zusammenwirkende Verschlussprofilierungen auf. Vorzugsweise ist das bewegliche Verschlussteil das Verschlusssteuerteil und dieses Verschlusssteuerteil wirkt mit zwei ortsfesten Verschlussteilen zusammen, von denen das eine an der Deckelschale und das andere an der Grundschale befestigt ist. Das Verschlusssteuerteil sowie die beiden ortsfesten Verschlussteile weisen die zueinander komplementären, formschlüssig zusammenwirkenden Verschlussprofilierungen auf. Unter den Verschlussprofilierungen sind zapfen- oder stegförmige Profilierungen wie auch nut- oder aussparungsförmige Profilierungen zu verstehen.

In weiterer Ausgestaltung der Erfindung ist der Bewegungsübertragungsstrang sowohl mit der wenigstens einen stirnseitigen Verschlussanordnung als auch mit dem wenigstens einen längsseitigen Scharnierverschluss derart gekoppelt, dass in der Freigabe- und der Scharnierfunktion des Scharnierverschlusses die Verschlussanordnung entriegelt und in der Arretierstellung des Scharnierverschlusses verriegelt ist. Diese Ausgestaltung gewährleistet, dass mittels der manuell bedienbaren Betätigungseinrichtung sowohl die Scharnierverschlüsse der jeweiligen Längsseite als auch die wenigstens eine stirnseitige Verschlussanordnung gemeinsam angesteuert werden können. Dadurch ist gewährleistet, dass bei einem Öffnen der Scharnierverschlüsse auf einer Längsseite zwangsläufig auch die wenigstens eine stirnseitige Verschlussanordnung geöffnet wird.

In weiterer Ausgestaltung der Erfindung ist ein einzelner, umlaufender Bewegungsübertragungsstrang vorgesehen, der mit der wenigstens einen Verschlussanordnung sowie mit allen Scharnierverschlüssen gekoppelt ist. Der umlaufende Bewegungsübertragungsstrang ist entlang einer umlaufenden Seitenwandung der Grundschale auf einer Innenseite der Grundschale in Linearführungsabschnitten geführt, die an der Seitenwandung der Grundschale einstückig angeformt oder fest mit der Innenseite der Grundschale verbunden sind.

In weiterer Ausgestaltung der Erfindung sind zwei einander längsseitig gegenüberliegende Bewegungsstränge vorgesehen, die jeweils mit der wenigstens einen stirnseitigen Verschlussanordnung gekoppelt sind. Diese Ausgestaltung wird vorteilhaft kombiniert mit jeweils einem manuell bedienbaren Betätigungselement im Bereich der gegenüberliegenden Längsseiten der Transportbox. Durch Bedienung des Betätigungselements im Bereich einer Längsseite wird somit der dieser Längsseite zugeordnete Bewegungsstrang verlagert, um die wenigstens eine stirnseitige Verschlussanordnung zu entriegeln oder zu verriegeln und gleichzeitig die Scharnierverschlüsse der entsprechenden Längsseite zu verriegeln oder zu entriegeln.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in einem Horizontalschnitt eine Ausführungsform einer erfindungsgemäßen Transportbox in Form einer Dachbox für einen Personenkraftwagen,
- Fig. 2: in vergrößerter Darstellung einen vertikalen Querschnitt durch die Dachbox nach Fig. 1,
- Fig. 3: in einem vertikalen Querschnitt ähnlich Fig. 2 eine weitere Ausführungsform einer erfindungsgemäßen Transportbox mit zwei getrennten Bewegungsübertragungssträngen zur Ansteuerung stirnseitiger Verschlussanordnungen,
- Fig. 4: einen Teilbereich der Transportbox nach Fig. 1 und 2 oder 3 auf Höhe einer manuell bedienbaren Betätigungseinrichtung,
- Fig. 5: in vergrößerter Darstellung einen Scharnierverschluss für die Transportbox nach den Fig. 1 bis 4,
- Fig. 6: schematisch eine Anordnung von zwei einander überlappenden Bewegungsübertragungssträngen für eine Transportbox nach den Fig. 1 bis 5,
- Fig. 7: eine weitere schematische Darstellung von zwei getrennten Bewegungsübertragungssträngen mit koppelbaren Zwischensträngen,
- Fig. 8: schematisch eine Darstellung für die Ansteuerung einer stirnseitigen Verschlussanordnung durch zwei gegenüberliegende Bewegungsübertragungsstränge,
- Fig. 9: eine weitere schematische Darstellung zur Ansteuerung einer stirnseitigen Verschlussanordnung durch zwei gegenüberliegende Bewegungsübertragungsstränge und
- Fig. 10: eine weitere schematische Darstellung zur alternierenden Ansteuerung einer stirnseitigen Verschlussanordnung durch zwei gegenüberliegende Bewegungsübertragungsstränge,
- Fig. 11 bis 13: schematisch unterschiedliche Positionsstellungen eines beweglichen Verschlusssteuerteils relativ zu einem ortsfesten Verschlussteil eines Scharnierverschlusses für die Transportbox nach den Fig. 1 bis 3,
- Fig. 14 und 15: schematisch zwei Darstellungen einer stirnseitigen Verschlussanordnung mit einem beweglichen Verschlusssteuerteil und einem ortsfesten Verschlussteil in einer ersten Freigabestellung,
- Fig. 16 und 17: die Darstellung nach den Fig. 14 und 15, jedoch in einer verriegelten Sicherungsstellung, und
- Fig. 18 und 19: die Darstellung nach den Fig. 14 bis 17, jedoch in einer gegenüberliegenden Freigabestellung.

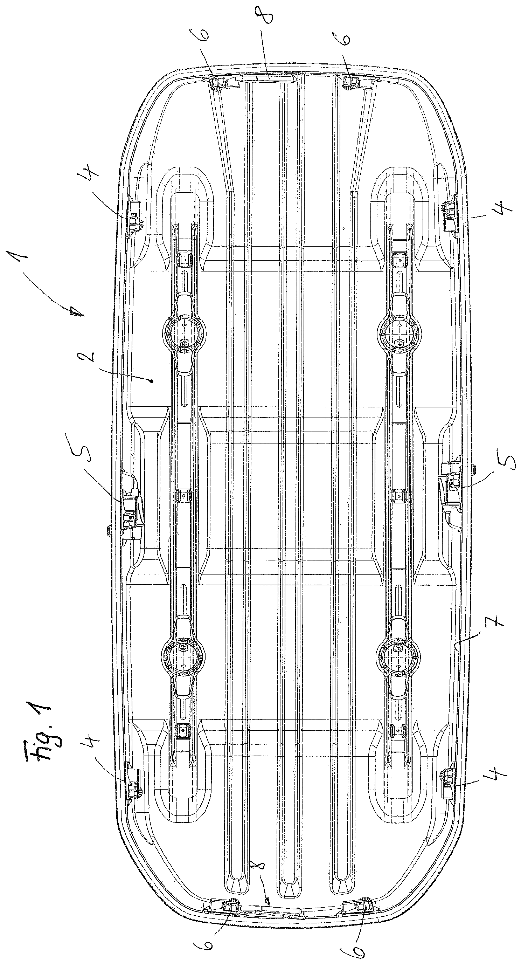

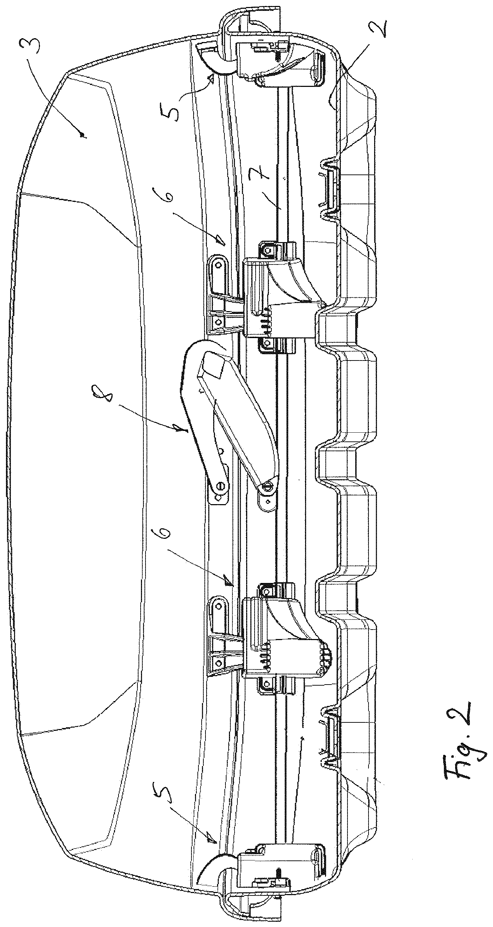

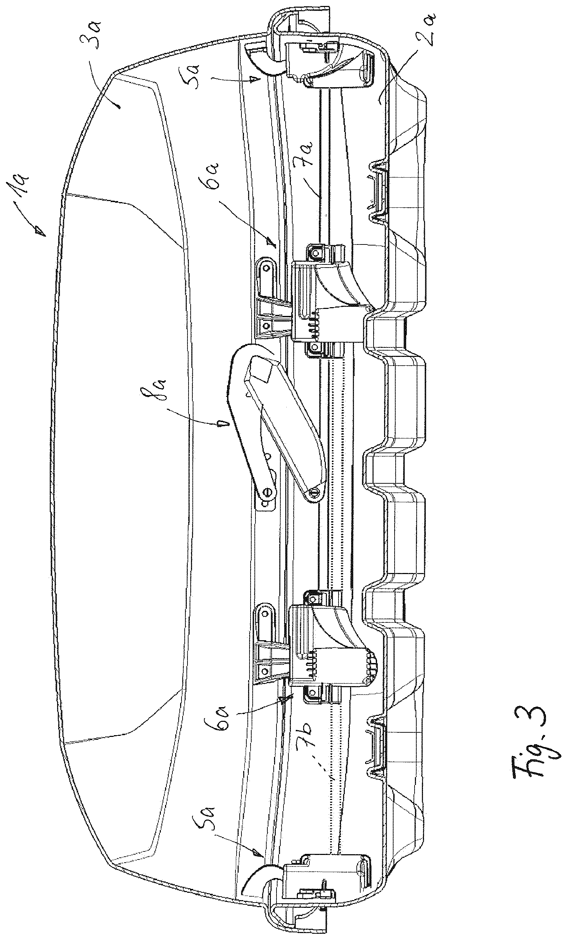

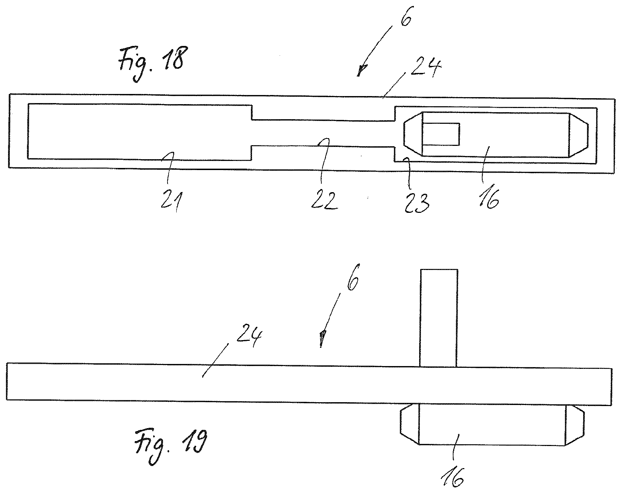

Eine Transportbox in Form einer Dachbox 1 nach den Fig. 1 bis 19 ist dazu vorgesehen, auf einem Dachbereich eines Personenkraftwagens montiert zu werden. Die Dachbox 1 ist mit einer Grundschale 2 versehen, die in auf dem Personenkraftwagen montiertem Zustand mit dem Dachbereich des Personenkraftwagens fest verbunden ist. Die Dachbox 1 weist, wie Fig. 1 zu entnehmen ist, eine längserstreckte Form mit zwei einander gegenüberliegenden Längsseiten sowie zwei ein Frontende und ein Heckende der Dachbox 1 definierenden Stirnseiten auf. In fahrzeugfest montiertem Zustand ist die Dachbox 1 in Fahrzeuglängsrichtung ausgerichtet, so dass die Längsseiten der Dachbox zumindest weitgehend in Fahrzeuglängsrichtung erstreckt sind. Eine in Fahrtrichtung nach vorne weisende Stirnseite der Dachbox 1 bildet eine Frontseite. Eine in Fahrtrichtung nach hinten weisende Stirnseite bildet eine Heckseite oder Rückseite der Dachbox 1. Die Dachbox weist zudem eine Deckelschale 3 auf, die in geschlossenem Zustand (Fig. 2 und 3) auf einem umlaufenden Rand der Grundschale 2 aufliegt und gemeinsam mit der Grundschale innenseitig ein Transportvolumen umgrenzt.

Die Deckelschale 3 ist mit der Grundschale 2 über insgesamt sechs Scharnierverschlüsse verbunden, wobei jeweils drei Scharnierverschlüsse 4, 5 in gleichmäßigen Abständen auf gegenüberliegenden Längsseiten der Dachbox 1 positioniert sind. Ein mittlerer Scharnierverschluss 5 auf jeder Längsseite weist zudem in nachfolgend näher beschriebener Weise jeweils eine manuell bedienbare Betätigungseinrichtung auf. Alle Scharnierverschlüsse 4, 5 sind bezüglich ihrer nachfolgend aufgeführten Funktionen identisch gestaltet. Die Scharnierverschlüsse 4, 5 weisen zum einen eine Arretierstellung auf, in der die Deckelschale 3 in geschlossenem Zustand mit der Grundschale 2 verriegelt ist. Zudem weisen die Scharnierverschlüsse 4, 5 eine Scharnierfunktion auf, wobei die jeweils drei Scharnierverschlüsse jeder Längsseite eine gemeinsame Scharnierachse definieren, um die Deckelschale 3 gegenüber der Grundschale 2 aufschwenken und zuschwenken zu können. Schließlich weisen die Scharnierverschlüsse 4, 5 eine Freigabefunktion auf, um jeweils eine Längsseite der Dachbox 1 öffnen zu können. Hierzu werden die Scharnierverschlüsse 4, 5 der zu öffnenden Längsseite in eine Freigabestellung überführt. Die Scharnierverschlüsse 4, 5 weisen für die Verwirklichung dieser verschiedenen Funktionen jeweils ein beweglich gelagertes Verschlusssteuerteil auf, das mit jeweils einem grundschalenfesten Verschlussteil sowie einem deckelschalenfesten Verschlussteil so zusammenwirkt, dass die beiden Verschlussteile relativ zueinander freigegeben werden, oder dass ein formschlüssiges Schwenkscharnier erzielt wird, das gleichzeitig in dieser Scharnierstellung auch die Verriegelungsfunktion definiert. Denn wenn alle sechs Scharnierverschlüsse 4, 5 sich in ihrer Scharnierfunktion befinden, in der die deckelschalenseitigen Verschlussteile und die grundschalenseitigen Verschlussteile über die jeweiligen Verschlusssteuerteile zur Erzielung der Scharnierfunktion formschlüssig miteinander verbunden sind, ergibt sich zwangsläufig eine Arretierung der Deckelschale 3 relativ zur Grundschale 2 auf beiden gegenüberliegenden Längsseiten in der entsprechenden Schließstellung der Deckelschale 3.

Um bei crashbedingten Belastungen auf die Dachbox 1 eine stirnseitige Verformung und demzufolge ein mögliches Aufklaffen von Deckelschale 3 und Grundschale 2 im Frontbereich und im Heckbereich der Dachbox 1 zu vermeiden, sind beiden Stirnseiten zudem jeweils zwei zusätzliche Verschlussanordnungen 6 zugeordnet. Jede der Verschlussanordnungen 6 ist zwischen einer die Deckelschale 3 relativ zur Grundschale 2 freigebenden Freigabestellung und einer die entsprechende Stirnseite der Deckelschale 3 relativ zu der Stirnseite der Grundschale verriegelnden Sperrstellung verstellbar.

Die Dachbox 1 weist zudem an den gegenüberliegenden Stirnseiten der Dachbox 1 ein Steuergelenk 8 auf, das jeweils innenseitig an der Grundschale 2 und der Deckelschale 3 befestigt ist und eine Aufschwenk- und Zuschwenkbewegung der Deckelschale 3 gegenüber der Grundschale 2 zusätzlich führt und bezüglich eines maximalen Aufschwenkbereichs der Deckelschale 3 begrenzt.

Die längsseitigen Scharnierverschlüsse 4, 5 und die stirnseitigen Verschlussanordnungen 6 werden in nachfolgend näher beschriebener Weise gemeinsam angesteuert, um die gewünschten Öffnungs- und Verriegelungs- bzw. Scharnierfunktionen der Dachbox 1 realisieren zu können. Bei den dargestellten Ausführungsformen erfolgt die Ansteuerung mechanisch. Es ist jedoch gemäß nicht dargestellter Ausführungsformen der Erfindung auch möglich, entweder jedem der Scharnierverschlüsse sowie jeder der Verschlussanordnungen jeweils einen vorzugsweise elektrischen Stellantrieb zuzuordnen, um die Verstellung für die unterschiedlichen Funktionen zu bewirken. Eine Ansteuerung dieser Stellantriebe kann drahtlos oder drahtgebunden erfolgen über eine Steuereinheit, die in der Dachbox integriert oder aber von der Dachbox getrennt vorgesehen sein kann. Alternativ ist es möglich, nur einen einzelnen elektrischen Stellantrieb oder mehrere, gruppenweise angeordnete elektrische Stellantriebe für jeweils wenigstens zwei Scharnierverschlüsse und/oder Verschlussanordnungen vorzusehen, die dann ebenfalls in geeigneter Weise zur Erzielung der beschriebenen Funktionen drahtgebunden oder drahtlos durch eine entsprechende Steuereinheit angesteuert werden.

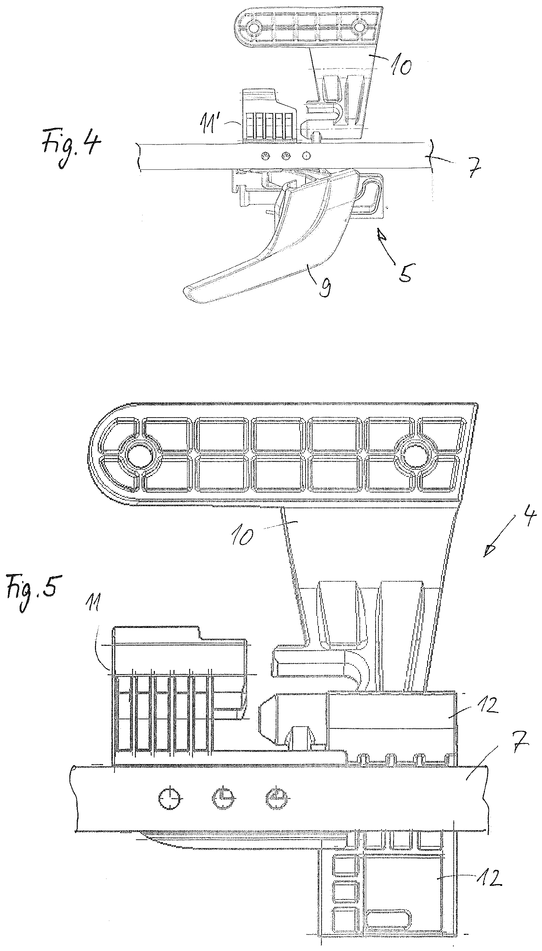

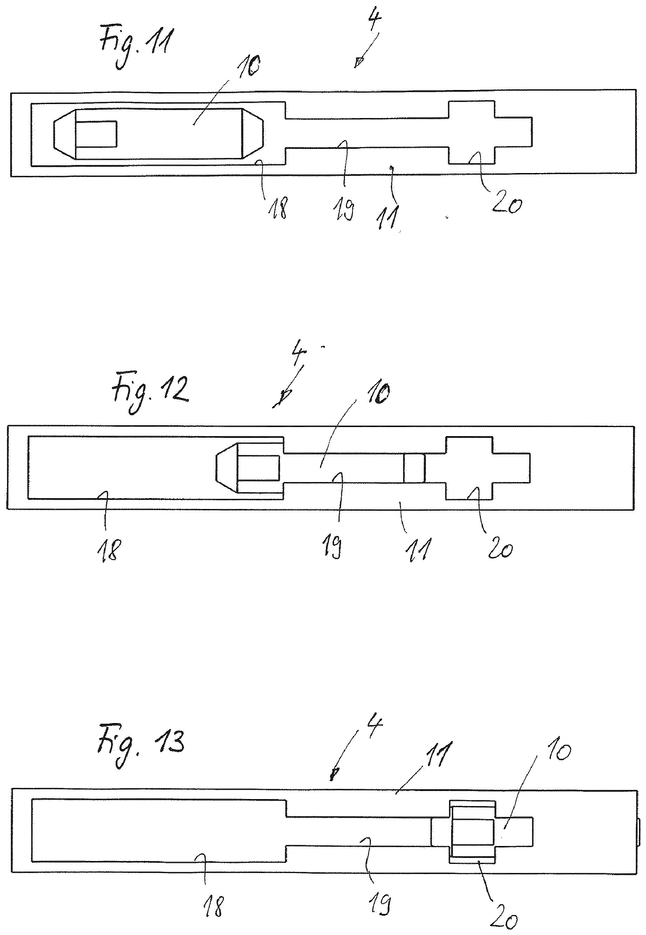

Bei den dargestellten Ausführungsbeispielen weisen die Scharnierverschlüsse 4, 5 gemäß den Fig. 4 und 5 sowie 11 bis 13 jeweils ein deckelschalenfestes Verschlussteil 10 sowie ein grundschalenfestes Verschlussteil 12 auf, die über ein längs des umlaufenden Rands der Grundschale 2 begrenzt linearbeweglich gelagertes Verschlusssteuerteil 11, 11' miteinander koppelbar oder relativ zueinander freigebbar sind. Dabei weist jedes deckelschalenseitige Verschlussteil 10 einen parallel zu dem umlaufenden Rand der Grundschale 2 erstreckten Scharnierzapfen auf und das zugeordnete Verschlusssteuerteil 11, 11' ist mit einer komplementären Zapfenaufnahme sowie einer Schiebeprofilierung versehen. Die Zapfenaufnahme umschließt in der Scharnierstellung den Scharnierzapfen des Verschlussteils 10 koaxial, wodurch sich die Scharnierachse ergibt. Die Schiebeprofilierung ist auf Höhe des grundschalenseitigen Verschlussteils 12 ausgebildet und komplementär zu einer Verschlussprofilierung des Verschlussteils 12 so gestaltet, dass die Schiebeprofilierung und die Verschlussprofilierung in der Scharnierstellung des Verschlusssteuerteils 11 in Hochrichtung formschlüssig ineinandergreifen. Wie den Fig. 11 bis 13 entnehmbar ist, weist jedes Verschlusssteuerteil 11 eine große Aussparung 18, eine schmalere Zwischenführung 19 sowie eine Scharnieraussparung 20 auf. Wenn der Scharnierzapfen des Verschlussteils 10 sich im Bereich der großen Aussparung 18 befindet, ist das deckelschalenseitige Verschlussteil 10 relativ zu dem grundschalenseitigen Verschlussteil 12 freigegeben. Bei einer Querverschiebung des Verschlusssteuerteils 11 aus der Darstellung gemäß Fig. 11 in der Zeichnungsebene nach links erreicht das Verschlussteil 10 zunächst die Zwischenführung 19, bis das Verschlussteil 10 gemäß Fig. 13 dann im Bereich der Scharnieraussparung 20 positioniert ist, in der der Scharnierzapfen des Verschlussteils 10 in der Scharnierstellung des Verschlusssteuerteils 11, 11' positioniert ist, die gleichzeitig auch die Verriegelungsstellung des jeweiligen Scharnierverschlusses 4 definiert.

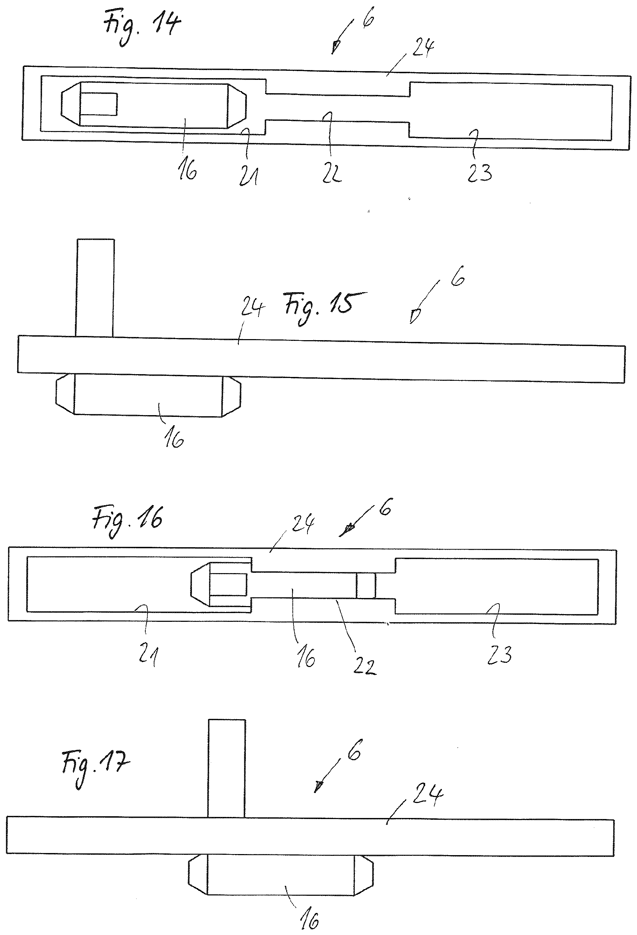

Zur Verstellung der Verschlusssteuerteile 11, 11' ist wenigstens ein Bewegungsübertragungselement 7 vorgesehen, wobei gemäß der Ausführungsform nach Fig. 2 ein einziges, umlaufendes Bewegungsübertragungselement 7 vorgesehen ist, das sich nicht nur über die beiden Längsseiten, sondern auch über beide Stirnseiten der Dachbox 1 erstreckt und mit den beiden stirnseitigen Verschlussanordnungen 6 im Frontbereich und im Heckbereich gekoppelt ist. Auch die stirnseitigen Verschlussanordnungen 6 sind jeweils mit einem deckelschalenseitig befestigten Verschlussteil sowie einem bodenschalenseitig befestigten Verschlussteil versehen, die über jeweils ein Verschlusssteuerteil 24 (Fig. 14 bis 19) relativ zueinander freigebbar oder verriegelbar sind. Wie anhand der Fig. 14 bis 19 erkennbar ist, ist das Verschlusssteuerteil 24 so gestaltet, dass eine Verschiebung in zwei entgegengesetzten Richtungen jeweils eine Freigabestellung definiert, wohingegen eine mittlere Positionierung eine Verriegelungsfunktion darstellt. Hierzu weist das Verschlusssteuerteil 24 eine mittige, schmale Verriegelungsführung 22 sowie zwei auf gegenüberliegenden Seiten an die mittige Verriegelungsführung 22 anschließende Freigabeaussparungen 21 und 23 auf. Ein Verschlusszapfen 16, der dem deckelschalenseitigen Verschlussteil zugeordnet ist, wird somit in der mittigen Verriegelungsführung 22 formschlüssig hintergriffen, wodurch sich die gewünschte Verriegelungsfunktion ergibt. Jede Verschlussanordnung 6 ist identisch ausgeführt, so dass jede Verschlussanordnung 6 ein entsprechendes Verschlusssteuerteil 24 aufweist, das analog zu den Verschlussteilen der Scharnierverschlüsse 4, 5 mit einem Verschlusszapfen 16 eines deckelschalenseitigen Verschlussteils und mit einem an der Grundschale befestigten Verschlussteil zusammenwirkt. Auch die Verschlusssteuerteile 24 der Verschlussanordnungen 6 sind mit dem umlaufenden Bewegungsübertragungselement 7 verbunden, das als zug- und druckfestes Flachband ausgeführt ist und innenseitig entlang des umlaufenden Rands der Grundschale 2 linearbeweglich verlegt ist. Bei einem umlaufenden Bewegungsübertragungselement weisen die gegenüberliegenden Scharnierverschlüsse 4, 5 in jeweils einer Bewegungsrichtung des Bewegungsübertragungselements einen Freilauf auf, so dass die Scharnierverschlüsse der jeweils einen Längsseite nur in einer Bewegungsrichtung aus einer Schließstellung in die Freigabestellung überführt werden können. Eine Verlagerung des Bewegungsübertragungselements 7 erfolgt durch jeweils eine Betätigungseinrichtung 9, die in Fig. 4 gezeigt ist. Die Betätigungseinrichtung 9 ist jeweils dem mittleren Scharnierverschluss 5 zugeordnet. Beim dargestellten Ausführungsbeispiel gemäß Fig. 4 ist ein begrenzt schwenkbeweglicher Bedienhebel vorgesehen, der die Verlagerung des Bewegungsübertragungselements 7 bewirkt.

Die beschriebene Freilauffunktion dient dazu, bei einer Entriegelung der Scharnierverschlüsse 4, 5 auf einer Längsseite auch die stirnseitigen Verschlussanordnungen 6 in ihre Freigabestellung zu überführen, gleichzeitig jedoch die Scharnierverschlüsse 4, 5 der gegenüberliegenden Längsseite in ihrer Verriegelungsstellung zu belassen. Die Verschlussanordnungen 6 sind in beiden Bewegungsrichtungen des Bewegungsübertragungselements 7 jeweils in eine Freigabestellung überführbar. Dies bedeutet, dass von beiden gegenüberliegenden Längsseiten aus die jeweilige Betätigungseinrichtung 9 ein Öffnen der Deckelschale 3 auf jeweils einer Längsseite ermöglicht, ohne dass die stirnseitigen Verschlussanordnungen 6 ein solches Öffnen behindern.

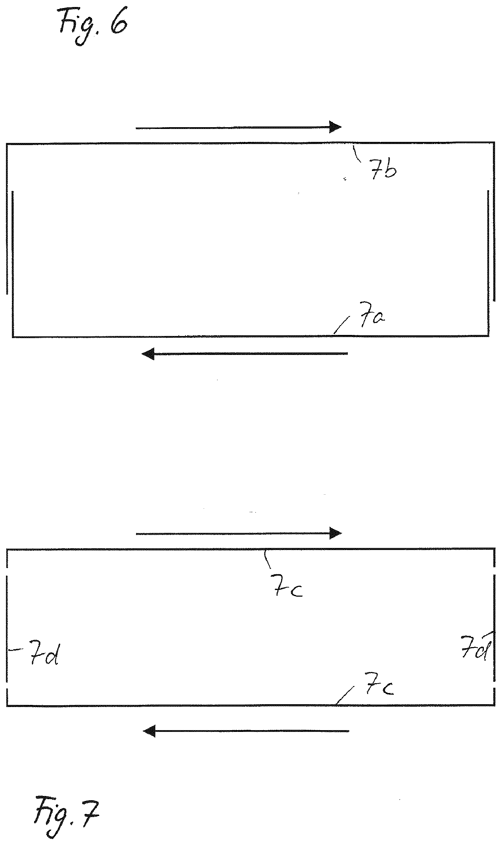

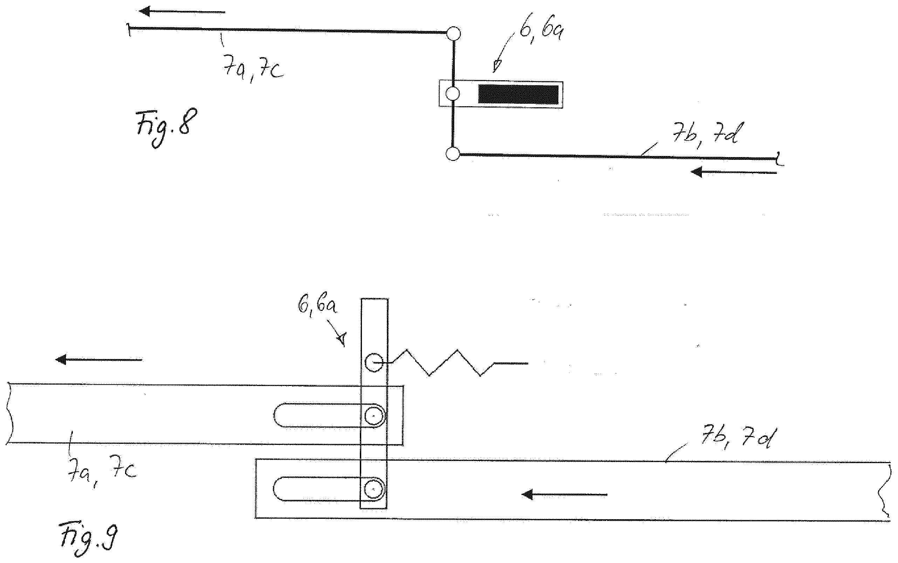

Wie anhand der Fig. 6 bis 10 erkennbar ist, kann alternativ zu einem umlaufenden Bewegungsübertragungselement 7 vorgesehen sein, über den Umfang der Grundschale 2 zwei voneinander getrennte Bewegungsübertragungsstränge 7a bis 7c vorzusehen, die einander gemäß Fig. 6 entweder im Bereich der stirnseitigen Verschlussanordnungen 6 überlappen oder gemäß Fig. 7 im Bereich der stirnseitigen Verschlussanordnungen 6 über jeweils einen Zwischenstrang 7d in Wirkverbindung mit den Verschlussanordnungen 6 sind. Eine erste Variante ist anhand der Fig. 8 erkennbar. Die Verschlussanordnung 6, 6a wird dabei an einem nicht näher bezeichneten Gelenkbauteil befestigt, das an seinen gegenüberliegenden Stirnenden gelenkig mit jeweils einem Bewegungsübertragungsstrang 7a, 7c oder 7b, 7d verbunden ist. Das Gelenkbauteil ist formstabil ausgeführt. Eine Verstellung des entsprechenden Verschlusssteuerteils der Verschlussanordnung 6, 6a erfolgt dadurch, dass jeweils einer der beiden Bewegungsübertragungsstränge 7a, 7c oder 7b, 7d ortsfest positioniert ist, während der andere Bewegungsübertragungsstrang 7a, 7c oder 7b, 7d in Pfeilrichtung bewegt wird. Dadurch ist jeweils ein stirnendseitiger Gelenkpunkt des Gelenkbauteils ortsfest und das Gelenkbauteil vollführt eine Schwenkbewegung um diesen ortsfesten Gelenkpunkt. Bei der Darstellung gemäß Fig. 8 ist somit bei einer entsprechenden Bewegung des jeweiligen Bewegungsübertragungsstrangs 7a, 7c oder 7b, 7d der Hub, den das Verschlusssteuerteil ausführt, geringer als der Hub des jeweiligen Bewegungsübertragungsstrangs. Falls hierdurch die Überführung des Verschlusssteuerteils aus der Sperrstellung in die Freigabestellung nicht ausreichend ist, ist es möglich, zusätzlich noch einen Längenausgleich vorzusehen.

Bei der Ausführungsform gemäß Fig. 9 wird eine nicht näher bezeichnete Feder verwendet, um das Verschlusssteuerteil der Verschlussanordnung 6, 6a in eine entsprechende Endposition zu überführen. Die beiden Bewegungsübertragungsstränge 7a, 7c und 7b, 7d weisen jeweils ein nicht näher bezeichnetes Langloch auf, dessen Länge dem Hub, d.h. der Verlagerung, des jeweiligen Bewegungsübertragungsstrangs 7a, 7c und 7b, 7d entspricht. Wird ein Bewegungsübertragungsstrang 7a, 7c bewegt, wird das Verschlusssteuerteil der Verschlussanordnung 6, 6a in die jeweils andere Endposition überführt. Die Rückstellung erfolgt durch die Feder. Das jeweilige Langloch definiert für jeweils einen Bewegungsübertragungsstrang 7a, c; 7b, 7d einen Freilauf.

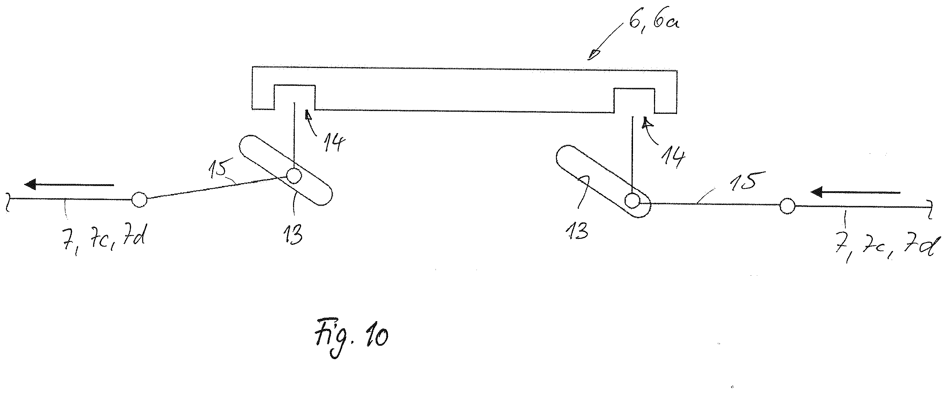

Bei der dritten Variante gemäß Fig. 10 ist eine Kulissenbahn 13 vorgesehen, in der jeweils ein Sperrbauteil linearbeweglich geführt ist. Das Sperrbauteil ist mittels jeweils eines Kopplungselements 15 mit dem jeweiligen Bewegungsübertragungsstrang 7, 7c, 7d verbunden. Das jeweilige Sperrbauteil greift in jeweils eine Sperraufnahme 14 des Verschlusssteuerteils der Verschlussanordnung 6, 6a ein, wobei die Zwangsführung des jeweiligen Sperrbauteils so ausgeführt ist, dass das Verschlusssteuerteil jeweils nur von einem der beiden Bewegungsübertragungsstränge mitgenommen werden kann, während das jeweilige andere Sperrbauteil nicht in Eingriff mit der anderen Sperraufnahme 14 ist. Dadurch ist es möglich, durch Bewegung jeweils eines Bewegungsübertragungsstrangs 7, 7c, 7d das Verschlusssteuerteil zu verlagern, ohne dass der gegenüberliegende Bewegungsübertragungsstrang diese Bewegung behindert.

## Patentansprüche

1. Transportbox, insbesondere Dachbox (1, 1a), für ein Kraftfahrzeug, aufweisend
- eine Grundschale (2, 2a), die in einem betriebsfertig montierten Zustand fahrzeugfest angeordnet ist,
- eine Deckelschale (3, 3a), die um wenigstens eine Schwenkachse schwenkbeweglich an der Grundschale (2, 2a) gelagert ist zwischen einer Schließstellung, in welcher die Deckelschale (3, 3a) unter Einschluss eines Transportvolumens auf der Grundschale (2, 2a) aufliegt, und einer Öffnungsstellung, in welcher die Deckelschale (3, 3a) unter Freigabe des Transportvolumens um die Schwenkachse verlagert von der Grundschale (2, 2a) angehoben ist,
- jeweils wenigstens einen Scharnierverschluss (4, 5, 5a) auf gegenüberliegenden Längsseiten, mittels dessen die Deckelschale (3, 3a) in der Schließstellung an der Grundschale (2, 2a) arretierbar oder freigebbar ist oder um die Schwenkachse schwenkbeweglich gelagert ist abhängig von einer Ansteuerung durch eine manuell bedienbare Betätigungseinrichtung (9),
wobei stirnseitig zusätzlich in einem Front- und/oder einem Heckbereich der Transportbox eine Sicherungseinrichtung mit wenigstens einem Sicherungselement vorgesehen ist, mittels dessen - in der Schließstellung der Deckelschale (3, 3a) - die Deckelschale (3, 3a) gegenüber der Grundschale (2, 2a) front- und/oder heckseitig verriegelt ist, **dadurch gekennzeichnet dass** die manuell bedienbare Betätigungseinrichtung (9) mittels wenigstens eines flexiblen, zug- und drucksteifen Bewegungsübertragungsstrangs (7 bis 7d) zur Ansteuerung wenigstens eines beweglichen, ein Verschlusssteuerteil (24) bildenden Verschlussteils für eine Überführung in die Sperrstellung oder die Öffnungsstellung ausgebildet ist, sowie dass im Bereich der wenigstens einen Verschlussanordnung (6, 6a) Ausgleichs- oder Freilaufelemente mit dem Bewegungsübertragungsstrang (7a bis 7d) gekoppelt sind, die eine alternative Betätigung der Verschlussanordnung (6, 6a) durch die Betätigungseinrichtung (9) der einen Längsseite oder der anderen Längsseite gewährleisten.

2. Transportbox nach Anspruch 1, **dadurch gekennzeichnet, dass** die Sicherungseinrichtung front- und/oder heckseitig jeweils eine Verschlussanordnung (6, 6a) aufweist, die wenigstens zwei miteinander in Wirkverbindung bringbare Verschlussteile hat, von denen eines der Deckelschale (3, 3a) und das andere der Grundschale (2, 2a) zugeordnet ist.

3. Transportbox nach Anspruch 2, **dadurch gekennzeichnet, dass** die Verschlussteile relativ zueinander zwischen einer die Deckelschale (3, 3a) und die Grundschale (2, 2a) miteinander verriegelnden Sperrstellung und einer die Deckelschale (3, 3a) und die Grundschale (2, 2a) relativ zueinander freigebenden Öffnungsstellung beweglich angeordnet sind.

4. Transportbox nach einem der vorhergehenden Ansprüche, **dadurch gekennzeichnet, dass** das wenigstens eine andere Verschlussteil ortsfest angeordnet ist, und dass die Verschlussteile zueinander komplementäre, formschlüssig zusammenwirkende Verschlussprofilierungen aufweisen.

5. Transportbox nach Anspruch 4, **dadurch gekennzeichnet, dass** das Verschlusssteuerteil eine Verschlussprofilierung mit in Bewegungsrichtung aneinanderschließenden unterschiedlichen Profilierungsabschnitten aufweist, von denen wenigstens ein Profilierungsabschnitt einen Freigabeabschnitt (21, 23) und wenigstens ein anschließender Profilierungsabschnitt einen Sperrabschnitt (22) bildet.

6. Transportbox nach einem der vorhergehenden Ansprüche, **dadurch gekennzeichnet, dass** der Bewegungsübertragungsstrang (7 bis 7d) sowohl mit der wenigstens einen stirnseitigen Verschlussanordnung (6, 6a) als auch mit dem wenigstens einen längsseitigen Scharnierverschluss (4, 5; 5a) derart gekoppelt ist, dass in der Freigabe- und der Scharnierfunktion des Scharnierverschlusses (4, 5; 5a) die Verschlussanordnung (6, 6a) entriegelt und in der Arretierstellung des Scharnierverschlusses (4, 5; 5a) verriegelt ist.

7. Transportbox nach einem der vorhergehenden Ansprüche, **dadurch gekennzeichnet, dass** ein einzelner umlaufender Bewegungsübertragungsstrang (7) vorgesehen ist, der mit der wenigstens einen Verschlussanordnung (6) sowie mit allen Scharnierverschlüssen (4, 5) gekoppelt ist.

8. Transportbox nach einem der Ansprüche 1 bis 6, **dadurch gekennzeichnet, dass** zwei einander längsseitig gegenüberliegende Bewegungsübertragungsstränge (7a bis 7c) vorgesehen sind, die jeweils mit der wenigstens einen stirnseitigen Verschlussanordnung (6, 6a) gekoppelt sind.

## Claims

1. A transport box, in particular a roof box (1, 1a), for a motor vehicle, having
- a base shell (2, 2a) which is arranged fixed to the vehicle in a state assembled ready for operation,
- a lid shell (3, 3a) which is mounted swivelably about at least one swivel axis on the base shell (2, 2a), between a closed position in which the lid shell (3, 3a) rests on the base shell (2, 2a), enclosing a transport volume, and an open position in which the lid shell (3, 3a) is lifted off the base shell (2, 2a) having been moved about the swivel axis, allowing access to the transport volume,
- at least one hinge lock (4, 5, 5a) on each opposite longitudinal side, by means of which the lid shell (3, 3a) is lockable to or releasable from the base shell (2, 2a) in the closed position, or is mounted swivelably about the swivel axis depending on a control operation by a manually operable actuation device (9),
wherein a safeguarding device with at least one safeguarding element is additionally provided at the end sides(s) in a front area and/or a rear area of the transport box, by means of which the lid shell (3, 3a) is locked relative to the base shell (2, 2a) at the front side and/or at the rear side in the closed position of the lid shell (3, 3a), **characterized in that** the manually operable actuation device (9) is formed by means of at least one flexible, tension-rigid and compression-rigid movement transmission train (7 to 7d) for controlling at least one movable locking part, forming a locking control part (24) for a movement into the blocking position or into the open position, and **in that** equalizing or freewheel elements are coupled to the movement transmission train (7a to 7d) in the area of the at least one locking arrangement (6, 6a), which ensure an alternative actuation by an actuation device (9) of the locking arrangement (6, 6a) on the one longitudinal side or on the other longitudinal side.

2. The transport box according to claim 1, **characterized in that** the safeguarding device has at the front side and/or at the rear side a locking arrangement (6, 6a) which has at least two locking parts movable into an operative connection to one another, of which one part is associated with the lid shell (3, 3a) and the other part with the base shell (2, 2a).

3. The transport box according to claim 2, **characterized in that** the locking parts are arranged movable relative to one another, between a blocking position locking the lid shell (3, 3a) and the base shell (2, 2a) to one another, and an open position releasing the lid shell (3, 3a) and the base shell (2, 2a) relative to one another.

4. The transport box according to any of the preceding claims, **characterized in that** the at least one other locking part is arranged stationary, and **in that** the locking parts have positively interacting locking profiles complementary to one another.

5. The transport box according to claim 4, **characterized in that** the locking control part has a locking profile with differing profile sections adjoining one another in the movement direction, of which at least one profile section forms a releasing section (21, 23) and at least one adjoining profile section forms a blocking section (22).

6. The transport box according to any of the preceding claims, **characterized in that** the movement transmission train (7 to 7d) is coupled both to the at least one locking arrangement (6, 6a) at the end side(s) and to the at least one hinge lock (4, 5; 5a) on the longitudinal side(s) such that the locking arrangement (6, 6a) is unlocked in the release and hinge function of the hinge lock (4, 5; 5a) and is locked in the locking position of the hinge lock (4, 5; 5a).

7. The transport box according to any of the preceding claims, **characterized in that** a single continuous movement transmission train (7) is provided which is coupled to the at least one locking arrangement (6) and to all hinge locks (4, 5).

8. The transport box according to any of claims 1 to 6, **characterized in that** two movement transmission trains (7a bis 7c) opposite one another on the longitudinal sides are provided which are each coupled to the at least one locking arrangement (6, 6a) on the end side(s).

## Revendications

1. Boîte de transport, notamment coffre de toit (1, 1a), pour un véhicule automobile, présentant
- une coque de base (2, 2a) qui est disposée fixée au véhicule dans un état monté, prêt à l'emploi,
- un couvercle (3, 3a) qui est monté sur la coque de base (2, 2a) de manière à pivoter autour d'au moins un axe de pivotement entre une position de fermeture dans laquelle le couvercle (3, 3a) repose sur la coque de base (2, 2a) en emprisonnant un volume de transport, et une position d'ouverture dans laquelle le couvercle (3, 3a) lors de la libération du volume de transport est déplacé autour de l'axe de pivotement et soulevé de la coque de base (2, 2a),
- respectivement au moins une fermeture à charnière (4, 5, 5a) sur des côtés longitudinaux opposés, au moyen de laquelle le couvercle (3, 3a) dans la positon de fermeture est verrouillable à la coque de base (2, 2a) ou libérable de celle-ci ou est fixé de manière à pivoter autour de l'axe de pivotement en fonction d'un pilotage par un dispositif d'actionnement (9) qui se commande manuellement,
sachant qu'est prévu, en plus face avant, un dispositif de sûreté avec au moins un élément de sûreté dans une zone frontale et/ou arrière de la boîte de transport, au moyen duquel dispositif - dans la position de fermeture du couvercle (3, 3a) - le couvercle (3, 3a) est verrouillé par rapport à la coque de base (2, 2a) côté frontal et/ou arrière, **caractérisée en ce que** le dispositif d'actionnement (9) se commandant manuellement est constitué au moyen d'au moins un train de transmission de mouvement (7 à 7d) flexible, rigide en traction et en pression, destiné au pilotage d'au moins une pièce de fermeture mobile, formant une pièce de commande de fermeture (24) pour un transfert dans la position de blocage ou la position d'ouverture, ainsi **en ce que** dans la zone dudit au moins un dispositif de fermeture (6, 6a), des éléments de compensation ou de course libre sont couplés au train de transmission de mouvement (7a à 7d), qui assurent un actionnement alternatif du dispositif de fermeture (6, 6a) par un dispositif d'actionnement (9) de l'un des côtés longitudinaux ou de l'autre.

2. Boîte de transport selon la revendication 1, **caractérisée en ce que** le dispositif de sûreté présente côté frontal et/ou arrière respectivement un dispositif de fermeture (6, 6a) qui a au moins deux pièces de fermeture pouvant être amenées ensemble en liaison fonctionnelle dont l'une est associée au couvercle (3, 3a) et l'autre à la coque de base (2, 2a).

3. Boîte de transport selon la revendication 2, **caractérisée en ce que** les pièces de fermeture sont disposées de manière mobile l'une par rapport à l'autre entre une position de blocage verrouillant ensemble le couvercle (3, 3a) et la coque de base (2, 2a) et une position d'ouverture libérant l'un de l'autre le couvercle (3, 3a) et la coque de base (2, 2a).

4. Boîte de transport selon l'une des revendications précédentes, **caractérisée en ce que** ladite au moins une autre pièce de fermeture est disposée de manière fixe, et que les pièces de fermeture présentent des profilages de fermeture complémentaires entre eux, interagissant par complémentarité de forme.

5. Boîte de transport selon la revendication 4, **caractérisée en ce que** la pièce de commande de fermeture présente un profilage de fermeture avec différentes sections de profilage adjacentes dans le sens du mouvement, parmi lesquelles au moins une section de profilage forme une section de libération (21, 23) et au moins une section de profilage adjacente forme une section de blocage (22).

6. Boîte de transport selon l'une des revendications précédentes, **caractérisée en ce que** le train de transmission de mouvement (7 à 7d) est couplé aussi bien audit au moins un dispositif de fermeture (6, 6a) face avant qu'à ladite au moins une fermeture à charnière (4, 5 ; 5a) côté longitudinal de sorte que le dispositif de fermeture (6, 6a) est déverrouillé dans la fonction de libération et dans la fonction de charnière de la fermeture à charnière (4, 5 ; 5a) et est verrouillé dans la position de verrouillage de la fermeture à charnière (4, 5 ; 5a).

7. Boîte de transport selon l'une des revendications précédentes, **caractérisée en ce qu'**est prévu un train individuel de transmission de mouvement (7) circonférentiel qui est couplé audit au moins un dispositif de fermeture (6) ainsi qu'à toutes les fermetures à charnière (4, 5).

8. Boîte de transport selon l'une des revendications 1 à 6, **caractérisée en ce que** sont prévus deux trains de transmission de mouvement (7a à 7c) opposés l'un à l'autre du côté longitudinal, qui sont couplés respectivement audit au moins un dispositif de fermeture (6, 6a) face avant.
